Europäisches Patentamt

European Patent Office

Office européen des brevets

(19)

(11) Veröffentlichungsnummer: **0 306 677 B1**

## (12) EUROPÄISCHE PATENTSCHRIFT

(45) Veröffentlichungstag der Patentschrift: **18.12.91**

(51) Int. Cl.⁵: **C09K 21/04**, E04B 1/94

(21) Anmeldenummer: **88111878.0**

(22) Anmeldetag: **23.07.88**

(54) **Verfahren zur Herstellung einer Brandschutzmasse.**

(30) Priorität: **05.09.87 DE 3729867**

(43) Veröffentlichungstag der Anmeldung:
**15.03.89 Patentblatt 89/11**

(45) Bekanntmachung des Hinweises auf die
Patenterteilung:
**18.12.91 Patentblatt 91/51**

(84) Benannte Vertragsstaaten:
**AT BE CH ES FR GB IT LI LU NL SE**

(56) Entgegenhaltungen:
**EP-A- 0 217 569**
**JP-A-49 016 253**
**JP-A-50 086 563**
**JP-A-52 082 898**

(73) Patentinhaber: **FLACHGLAS AKTIENGESELL-
SCHAFT**
**Otto-Seeling-Promenade 10-14**
**W-8510 Fürth(DE)**

(72) Erfinder: **Tünker, Gerhard, Dipl.-Min.**
**Asterlagerstrasse 132**
**W-4100 Duisburg-Rheinhausen(DE)**

(74) Vertreter: **Andrejewski, Walter et al**
**Patentanwälte Andrejewski, Honke & Partner**
**Postfach 10 02 54 Theaterplatz 3**
**W-4300 Essen 1(DE)**

EP 0 306 677 B1

# EP 0 306 677 B1

## Beschreibung

Die Erfindung bezieht sich gattungsgemäß auf ein Verfahren zur Herstellung einer im Brandfall aufschäumenden Brandschutzmasse für feuerabschirmende Verglasungen, insbesondere für feuerabschirmende Verglasungen aus zumindest zwei Glasscheiben und zumindest einem Scheibenzwischenraum, in dem die Brandschutzmasse angeordnet ist, wobei ein wasserlösliches Aluminiumsalz, eine anorganische Säure und eine Wassermenge zusammengebracht und zur Brandschutzmasse umgesetzt werden. Die hergestellte Brandschutzmasse enthält hydratisiertes Metallsalz. Es versteht sich, daß die Brandschutzmasse im Zuge der Integration mit der oder den Glasscheiben der Verglasung in geeigneter Atmosphäre, z. B. mit Warmluft, getrocknet wird, ohne daß die Hydration, deren Wasser für das Aufschäumen erforderlich ist, störend beeinträchtigt wird.

Bei dem bekannten gattungsgemäßen Verfahren (DE-PS 24 14 576) ist das Aluminiumsalz ein hydratisiertes Aluminiumchlorid. Die anorganische Säure ist Phosphorsäure. Die hergestellte Brandschutzmasse besteht hauptsächlich aus hydratisiertem Aluminiumphosphat, ist jedoch chlorhaltig, - was auch beim Trocknen stört, da Chlorgase frei werden. Ihre Alterungsbeständigkeit in bezug auf optische Klarheit unter Sonnen- und Wärmeeinwirkung, ihre Feuerfestigkeit, ihr Aufschäumvermögen und andere Eigenschaften sind verbesserungsbedürftig.

Der Erfindung liegt die Aufgabe zugrunde, das gattungsgemäße Verfahren so zu führen, daß sich Brandschutzmassen ergeben, die sich durch Alterungsbeständigkeit unter Sonnen- und Wärmeeinwirkung sowie durch ihre Feuerfestigkeit und ihr Aufschäumvermögen auszeichnen.

Zur Lösung dieser Aufgabe lehrt die Erfindung, daß als Aluminiumsalz Monoaluminiumhydrophosphat, $Al(H_2PO_4)_3$, in einer Menge von 90 bis 95 Gew.-% sowie als anorganische Säure Borsäure, $H_3BO_3$, in einer Menge von 4 bis 8 Gew.-% verwendet werden, und zwar im Gewichtsverhältnis von Monoaluminiumhydrophosphat/Borsäure im Bereich von 10 bis 25, und daß das Umsetzungsprodukt durch die Wassermenge flüssig bis zähflüssig oder extrudierbar eingestellt wird. Wenn man erreichen will, daß die hergestellte Brandschutzmasse auch beim und nach dem Aufschäumen noch zum Verbund der Scheiben einer aus mehreren Scheiben mit Scheibenzwischenraum oder Scheibenzwischenräumen aufgebauten Verglasung beiträgt, empfiehlt es sich, zusätzlich Aluminiumoxid in Form eines Hydroxid-Gels in einer Menge von 1 bis 2 Gew.-% in das Wasser einzubringen.

Mit dem erfindungsgemäßen Verfahren können Brandschutzmassen und damit feuerabschirmende Verglasungen für die verschiedenen Verwendungszwecke hergestellt werden. Das erfindungsgemäße Verfahren führt zu einer Brandschutzmasse, deren Ausgangskomponenten so eingestellt sind, daß die Brandschutzmasse im Brandfall durch Aufschäumen ihr Volumen um zumindest einen Faktor 6, zumeist um mehr als einen Faktor 8, vergrößert. Von Vorteil ist, daß die Ausgangskomponenten so eingestellt werden können, daß die Brandschutzmasse, vor dem Brandfall, eine optisch klare Schicht bildet.

Die erreichten Vorteile sind darin zu sehen, daß nach dem erfindungsgemäßen Verfahren Brandschutzmassen entstehen, die sich durch hohe Alterungsbeständigkeit unter Sonnen- und Wärmeeinwirkung sowie durch ihre Feuerfestigkeit und ihr Aufschäumungsvermögen auszeichnen, wobei die Brandschutzmassen ohne Schwierigkeiten so eingestellt werden, daß sie in der Verglasung eine optisch klare Schicht bilden. Im allgemeinen wird man die Brandschutzmassen in Schichten auf ein Substrat aufbringen und schichtweise trocknen. Man kann die Brandschutzmassen aber auch zu einem flächigen Produkt mittels Extruder und Breitschlitzdüse extrudieren.

### Ausführungsbeispiele

Zur Überprüfung der verbesserten Eigenschaften der erfindungsgemäßen Brandschutzmasse werden Musterscheiben nach einem einheitlichen Verfahren hergestellt und verschiedenen Tests unterzogen.

Verwendet wird eine 50%-ige technische Lösung von Monoaluminiumphosphat MAP. Zusatzstoffe werden gegebenenfalls mit einem Rührwerk unter leichtem Erwärmen darin gelöst. Die fertige klare Lösung wird auf eine Floatglasscheibe von 2.8 mm Dicke aufgegossen (2 kg Lösung/m²). Die Trocknung erfolgt in einem Trockenschrank mit definierter Gasatmosphäre bei 90° C bis die Schicht einen Restwassergehalt von 20 % besitzt. Die Schichtdicke beträgt dann ca. 0.5 mm. Durch Abdecken der getrockneten Schicht mit einer blanken 2.8 mm dicken Floatglasscheibe und Verbinden unter Wärmeeinwirkung bei 80° C wird eine Verbundscheibe mit einer Brandschutzschicht hergestellt.

Die folgenden Tests werden, auch an fertigen Scheibenverbunden, durchgeführt.

a) Lagerung über 72 Stunden bei 80° C zur Prüfung der Alterungsbeständigkeit: Es darf keine Trübung auftreten.

b) Aufheizen eines Scheibenabschnittes im Muffelofen auf 600° C. Messung der Schichtdicke des

2

EP 0 306 677 B1

gebildeten Schaumes: Die Schicht sollte auf mehr als das 8-fache der Ausgangsdicke von 0.5 mm aufschäumen.

c) Standzeit im Brandversuch mit einem Laborbrandofen in Anlehnung an DIN 4102 - Teil 5, Abschnitt 7 - mit der Einheitstemperaturkurve ETK: Visuelle Beurteilung des Scheibenverbundes während des Aufschäumens. Beim eventuellen Zerspringen der Glasscheibe dürfen sich keine Bruchstücke von der aufgeschäumten Schicht ablösen.

Die Ergebnisse der Tests sind in der unten angegebenen Tabelle zusammengefaßt. Es ist zu erkennen, daß reines MAP (Nr. 1) im Alterungstest und beim Aufschäumverhalten unzureichende Ergebnisse liefert. Durch einen Zusatz von 2 % $H_3BO_3$ (Nr. 2) wird lediglich die Schaumbildung etwas verbessert. Bei einem Zusatz von 6,5 % $H_3BO_3$ (Nr. 3) wird überraschenderweise die Trübungsneigung im Alterungstest gänzlich unterdrückt. Gleichzeitig verbessert sich auch das Aufschäumverhalten deutlich, was zu einem guten Brandverhalten führt. Verbesserungswürdig ist der zu geringe Scheibenverbund beim Aufschäumen. Bei weiterer Erhöhung des Borsäuregehaltes auf 10 % wird keine Verbesserung erzielt (Nr. 4), sondern es tritt wieder eine starke Trübungsneigung auf. Bei Modifizierung von Nr. 3 durch einen Zusatz von 1,5 % $Al(OH)_3$ in Form einer in MAP gut löslichen Verbindung (z. B. Aluminiumhydroxidgel) erhält man eine hervorragend brauchbare Mischung (Nr. 7). Eine weitere Steigerung des Aluminiumhydroxidgehaltes auf 3,5 % wirkt sich jedoch wieder nachteilig auf die Schaumbildung aus. Die Tests an zwei zum Vergleich hergestellten borfreien Mischungen Nr. 5 und 6 zeigen, daß ein alleiniger Zusatz von $Al(OH)_3$ zum MAP nicht zu befriedigenden Ergebnissen führt und nur eine Kombination mit Borsäure optimale Ergebnisse liefert.

Tabelle

| Vergleich der Eigenschaften verschiedener Brandschutzschichten | | | | |
|---|---|---|---|---|
| Zusammensetzung Nr. Alterung 72h/80 °C | | Schaumdicke in mm | Standzeit in min | Verbund nach Aufschäumen |
| 1) MAP ohne Zusatz | trüb | 1 | n.b. | n.b. |
| 2) MAP/2 % $H_3BO_3$ | trüb | 2 | n.b. | n.b. |
| 3) MAP/6.5 % $H_3BO_3$ | klar | 5 | 45 | schlecht |
| 4) MAP/10 % $H_3BO_3$ | trüb | 5 | n.b. | n.b. |
| 5) MAP/1 % $Al(OH)_3$ | trüb | 1 | n.b. | n.b. |
| 6) MAP/2 % $Al(OH)_3$ | trüb | 2 | n.b. | n.b. |
| 7) MAP/6.5 % $H_3BO_3$/ 1.5 % $Al(OH)_3$ | klar | 5 | 60 | gut |
| 8) MAP/6.5 % $H_3BO_3$/ 3.5 % $Al(OH)_3$ | klar | 2 | 30 | gut |
| n.b. = nicht bestimmt | | | | |

## Patentansprüche

1. Verfahren zur Herstellung einer im Brandfall aufschäumenden Brandschutzmasse für feuerabschirmende Verglasungen, insbesondere für feuerabschirmende Verglasungen aus zumindest zwei Glasscheiben und zumindest einem Scheibenzwischenraum, in dem die Brandschutzmasse angeordnet ist, wobei ein wasserlösliches Aluminiumsalz, eine anorganische Säure und eine Wassermenge zusammengebracht und zur Brandschutzmasse umgesetzt werden, **dadurch gekennzeichnet,** daß als Aluminiumsalz Monoaluminiumhydrophosphat, $Al(H_2PO_4)_3$, in einer Menge von 90 bis 95 Gew.-% sowie als anorganische Säure Borsäure, $H_3BO_3$, in einer Menge von 4 bis 8 Gew.-%, verwendet werden, und zwar im Gewichtsverhältnis von Monoaluminiumhydrophosphat/Borsäure im Bereich von 10 bis 25, und daß das Umsetzungsprodukt durch die Wassermenge flüssig bis zähflüssig oder extrudierbar eingestellt wird.

2. Verfahren nach Anspruch 1, dadurch gekennzeichnet, daß zusätzlich Aluminiumoxid, $Al_2O_3$, in Form eines Hydroxid-Gels in einer Menge von 1 bis 2 Gew.-% in das Wasser eingebracht wird.

## Claims

1. A process for the production of a fire-protecting composition, that foams up in the event of a fire, for fire-shielding glass screens, particularly for fire-shielding glass screens of at least two panes of glass and at least one interspace between the panes in which the fire-protecting composition is placed, in

3

which a water-soluble aluminium salt, an inorganic acid and a quantity of water are combined and converted into the fire-protecting composition, *characterized in that* monoaluminium hydrophosphate $Al(H_2PO_4)_3$ in a quantity of 90 to 95% by weight is used as aluminium salt and boric acid $H_3BO_3$ in a quantity of 4 to 8% by weight is used as inorganic acid, this being with a monoaluminium hydrophosphate/boric acid ratio by weight of the order of 10 to 25, and that by the quantity of water added the converted product is adjusted to be either fluid, viscous, or extrudable.

2. A process according to Claim 1, *characterized in that* in addition a quantity of 1 to 2% by weight of aluminium oxide, $Al_2O_3$, is introduced into the water in the form of a hydroxide gel.

**Revendications**

1. Procédé de fabrication d'une masse ignifugeante moussant en cas d'incendie pour des vitrages de protection contre le feu, en particulier pour des vitrages de protection contre le feu constitués d'au moins deux vitres et d'au moins un intervalle entre les vitres dans lequel est disposée la masse ignifugeante, un sel d'aluminium soluble dans l'eau, un acide inorganique et une quantité d'eau étant mis en présence et transformés en une masse ignifugeante, **caractérisé par le fait** qu'il utilise comme sel d'aluminium du phosphate monohydraté d'aluminium, $Al(H_2PO_4)_3$, dans une quantité de 90 à 95 % en poids ainsi que comme acide inorganique, de l'acide borique, $H_3BO_3$, dans une quantité de 4 à 8 % en poids, à savoir dans un rapport de poids de phosphate monohydraté d'aluminium /acide borique de l'ordre de 10 à 25; et que le produit de transformation est réglé par la quantité d'eau de façon à être liquide à visqueux ou extrudable.

2. Procédé selon la revendication 1, caractérisé par le fait qu'à l'eau est ajouté, en plus, de l'oxyde d'aluminium, $Al_2O_3$, sous la forme d'un gel hydroxyde dans une quantité de 1 à 2 % en poids.